# EUROPEAN PATENT SPECIFICATION

(11) **EP 2 281 721 B1**
(45) Date of publication and mention of the grant of the patent: **09.01.2013**
(21) Application number: 10172093.6
(22) Date of filing: 05.08.2010
(51) Int. Cl.: B60R 3/00

(54) **Running board for vehicles**
Trittbrett für Kraftfahrzeuge
Marche-pied pour des véhicule

(30) Priority: 06.08.2009 IT BS20090150
(43) Date of publication of application: 09.02.2011
(73) Proprietor: S.A.R.A. Ing. Sandro Benussi, 25135 Brescia (IT)
(72) Inventor: Benussi, Giampaolo, 25122, Brescia (IT)
(74) Representative: Autuori, Angelo

(56) References cited:
- EP-B1- 1 288 075
- WO-A1-00/47448
- US-A- 5 944 332

## Description

### Field of invention

The present invention relates to the field of vehicles, although it preferably relates to vans, trucks, articulated lorries, i.e. related to all large vehicles.

More particularly, the present invention concerns a running board for vehicles.

### Background art

Many vehicles, particularly large ones such as vans, articulated lorries and trucks, rail vehicles and trams, are equipped with a running board on which there are one or more steps to facilitate the access of users to the vehicle.

A first known type of running board consists on a footstall. However, there is an obvious drawback in using said kind of running board. They are therefore well known fixed running boards consisting on a shaped body stably joined to the vehicle. The above mentioned steps are obtained shaping some recesses in the running board body. In these recesses, particularly, there are one or more footrest for users.

It is obvious that the footrests are necessarily facing up to allow the user to actively use them for access to the vehicle. However, they are subjected to pick up atmospheric agents such as rain, snow, hail or, more generally, liquids and solids, such as mud, rocks or more, which may also have been brought up from the ground by the movement of the vehicle.

In order to prevent the accumulation of solids and particularly liquids, they are known running boards with retractable footrest. For example, the running board described on the patent application D E 10 2004 047 546 shows the footrests made by substantially laminar flat elements pivoting between a closed position, in which they are aligned to the vehicle body, and an open position, or working position, in which they are facing up and they can be used by the user to enter the vehicle.

Another example is represented and described in the patent US 5 566 962, where it is shown a running board where the footrests are closed by a movable wall that is also useful as a safety element against the intrusion of strangers into the vehicle.

However, the rollaway running boards are complex to realize and therefore expensive. Moreover, they are often uncomfortable because of their small size and they are not able to overcome the drawback of the accumulation of liquids and solids on the steps. In fact, as easily deduced from the figures, liquids and solids can easily penetrate into the closable compartment that houses the footrests until they are in the open position and remain there even when switched to the closed position. Moreover, the solution presented in DE 10 2004 047 546 could have difficult in the transition from the open position to the closed position for example in case of accumulation of snow on the footrests.

Therefore they are known fixed running boards where the footrests are fixed and, to overcome the above described drawbacks, on them are made a plurality of passing through holes that allow liquids and solids to go under the vehicle.

It is also known that the running boards are generally made of the same material as the body of the vehicle or of the finishing elements as, for example, bumpers. In this case, it is clear that, especially when they are wet, they can be slippery.

To overcome this drawback they are known running boards having covering elements of the footrests. An example is described in the patent EP 1 288 075, according to the preamble of claim 1. These covering elements are made with non-skid material and they have exterior shapes that are apt to accentuate this property. They also are equipped with passing through holes placed in correspondence of the passing through holes made on the steps to allow the drain of liquids and solids that otherwise will amass on them.

However, these running boards have the drawback that the passing through holes, as well as they allow the drain of the liquids under the vehicle, they do not prevent the come up of liquids and solids from below the vehicle. The veichle in fact, during its course, causes the come up from the ground of splashing water, mud and dusts that go trough those passing through holes and lean against the part of vehicle immediately above the steps.

### Summary of the invention

The object of the present invention is to overcome, at least partly, the above mentioned drawbacks, by providing a running board for vehicles that allows the discharge under the vehicle of liquids and solids that tend to amass on the steps.

Another object of the invention is to provide a running board that is not crossable by liquids and solids that the vehicle bring up itself from the ground during its moving.

A further object of this invention is to provide an easy making running board that have, therefore, minimized costs. Furthermore, the running board of the invention must offer encumbrances at least equivalent, or even inferior, of the above mentioned known running board.

These and other objects, as more clearly shown after, are fulfilled by a step for vehicles according to the main claim. Advantageous embodiments of the invention will be defined in accordance with the dependent claims.

According to an aspect of the invention, the running board may include a shaped body in which it can be present at least a footrest provided by a plurality of first passing through holes in order to allow the discharge of liquids and/or solids from the footrest.

According to another aspect of the invention, the running board may also comprises one or more covering elements of the footrest each one supplied with a plurality of second passing through holes in order to allow the discharge of liquids and/or solids towards the below footrest.

According to a further aspect of the invention, the outgoings of the second passing through holes towards the footrest could be arranged in correspondence of areas of the footrest that do not have first passing through holes.

In other words, the second passing through holes can be made so that, when disposed in the working position, they are not in correspondence of the first passing through holes. In this way, liquids and solids raised from the ground, that penetrate through the first passing through holes, crash against the lower surface of the covering element. It is therefore advantageously prevented them to cross the running board.

### Brief description of the drawings

Further features and advantages of the invention will be more apparent upon reading of the detailed description of some preferred, non-exclusive embodiments of the invention, which are described as a non-limiting example with the help of the annexed drawings, in which:
**FIG. 1** is a vehicle with a step according to the invention;
**FIG. 2** is an exploded view of a step for vehicles according to the invention;
**FIG. 3** is a different exploded view of the step according to the invention;
**FIG. 4** is a perspective view of the step for vehicles according to the invention;

### Detailed description of an example of preferred embodiments

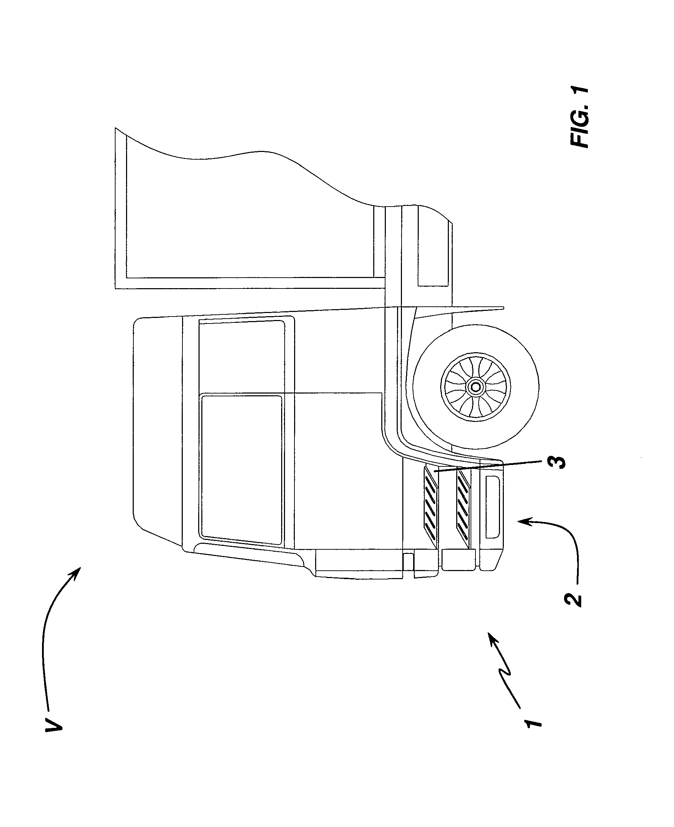

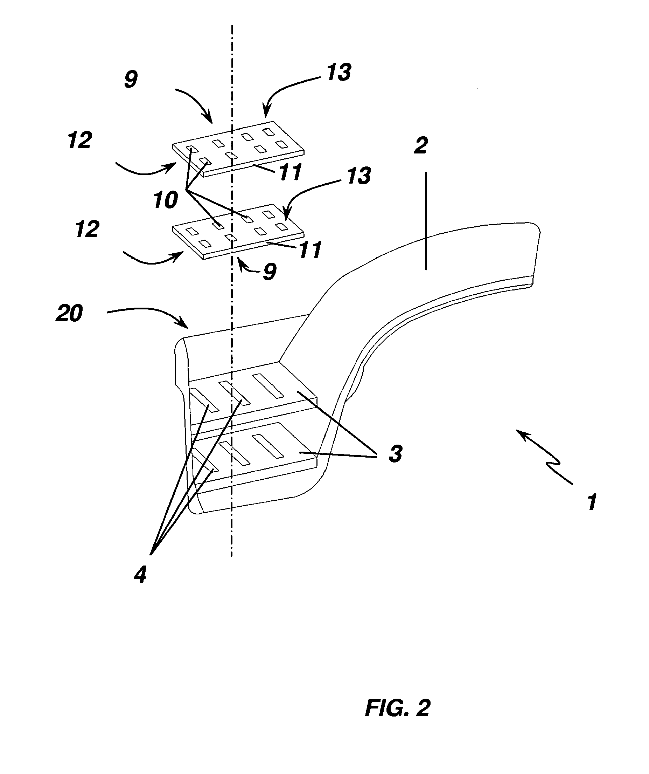

Referring to figures 1 and 2, it is described a running board **1** usable on any type of vehicles, with particular reference, however, to large vehicles like, for example, vans, trucks and articulated lorries, rail vehicles and trams.

According to an aspect of the invention, the running board **1** comprises a shaped body **2** in which there is at least one footrest **3** available for facilitate the user to access the vehicle **V.** This footrest **3** may have different embodiments. On the figures it is realized by a receded portion **20** of the profile of the shaped body **2.** However, this does not want to be restrictive for different embodiments.

The footrest **3** is provided with a plurality of first passing through holes **4** in order to allow the discharge of liquids and/or solids from the footrest **3** to the ground below the vehicle **V.** In this way is avoided their accumulation above the running board **1.**

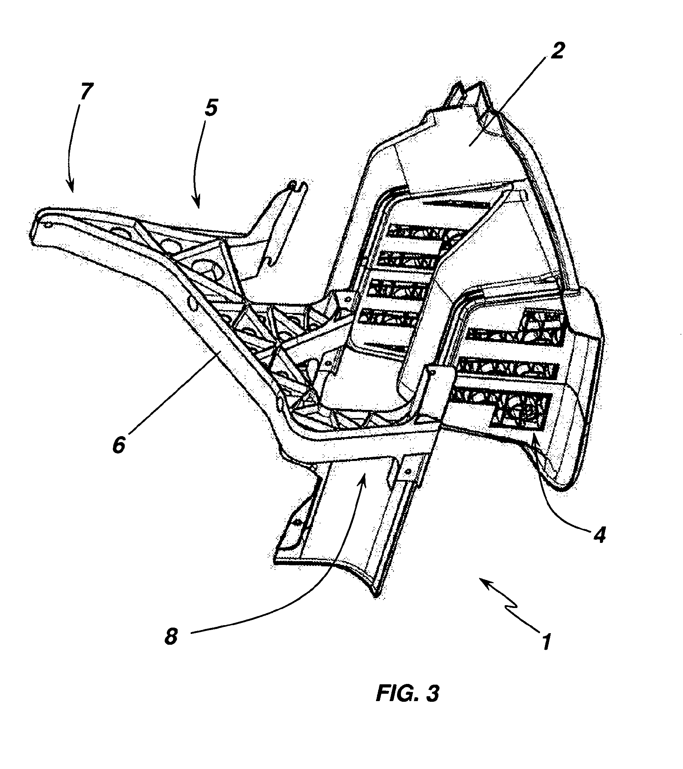

According to another aspect of the invention, the shaped body **2,** as can be seen in the exploded view of fig. 3, is associated with the vehicle **V** by coupling means **5** generally, but not necessarily, consisting in one or more brackets **6.** Particularly, a first portion **7** of each bracket **6** is joined to the vehicle **V,** while a second portion **8** is joined to the shaped body **2.**

Typically, the second portion **8** is C-shaped to bind the shaped body **2.** However, also in this case the represented and described embodiment is not restrictive for different embodiments.

In order to allow each bracket **6** to bear considerable loads, they have, as visible in the figures, at least partly a web structure. This allows to decrease the number of brackets **6.** Furthermore, this constructive particular united to the C-shaping with which support from below as a "spoon" the shaped body **2,** allows to made the shaped body **2** with low cost materials and decreased thicknesses. Particularly, the shaped body **2** can be made with plastic material, although the latter must have characteristics able to ensure its resistance to mechanical efforts, even if they generally are small mechanical efforts.

According to a further aspect of the invention, the running board **1** comprises at least one covering element **9** of the footrest **3.** Also this covering element **9** can be conveniently made with plastic material. It is also provided with a plurality of second passing through holes **10** in order to allow the discharge of liquids and/or solids to the footrest **3.**

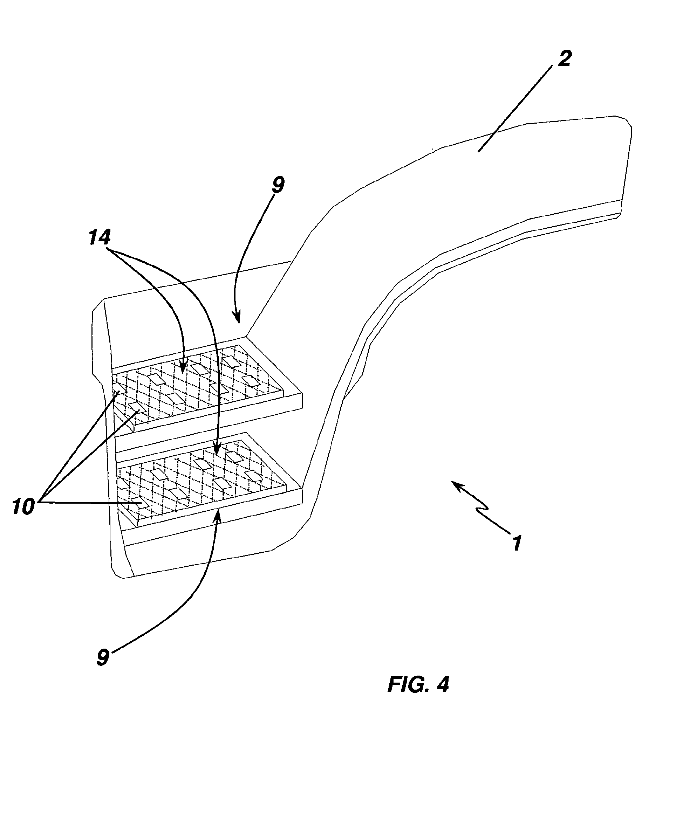

Generally, but not necessarily, the covering element **9,** as visible in Fig. 4, have an essentially laminar body **11** having a supporting surface **12** to the footrest **3** and a working surface **13** with a plurality of projections and/or recesses **14.** This embodiment advantageously reduces the slipperiness of the users on running board **1.**

According to a further aspect of the invention, the outgoings of the second passing through holes **10** towards the footrest **3** are arranged in correspondence to some areas of the footrest **3** out of the first passing through holes **4.**

Therefore, the first **4** and the second passing through holes **10** are not arranged the ones in correspondence of the others. This prevents that what raised by the moving vehicle **V** crosses the running board **1.** However, this does not prevent the water draining from the running board **1** to the ground below the vehicle **V.**

It is also visible that the covering element **9** can be made apart and associated to any running board **1** in use. It suffices, in fact, that the second passing through holes **10** are made in accordance with the array of the first passing through holes **4** of the running board **1** on which the covering element **9** will be applied.

According to another aspect of the invention, joining means of the covering element **9** on the surface of the footrest **3** are present, even if not represented in the figures. They may be made in different ways. For example, they could be made with screw means, or with projections present on the covering element that must be placed interlocking in proper holes on the footrest.

In any case, it is clear that it can be envisaged that the covering element **9** will be easily replaceable without having to replace the whole running board **1.**

Due to the above, the running board for vehicles of the invention fulfill all the intended objects. Particularly, the drawbacks of the background art are overcome, at least partly, because the proposed running board allows the discharge under the vehicle of liquids and solids that would tend to accumulate on it and, at the same time, prevents to liquids and solids, that the vehicle raises from the ground, to cross the running board.

So, the proposed running board reaches such objects while having a simple execution and presenting, therefore, contained costs. Furthermore, it presents contained encumbrances that are equivalent or smaller to the encumbrances of the above mentioned known running boards.

## Claims

1. A running board for vehicles (**V**) comprising:
- a shaped body (**2**) in which there is at least one footrest (**3**) provided with a plurality of first passing through holes (**4**) in order to allow the discharge of fluids and/or solids from said footrest (**3**);
- at least one covering element (**9**) of said footrest (**3**) provided with a plurality of second passing through holes (**10**) in order to allow the discharge of fluids and/or solids from said covering element (**9**) to said footrest (**3**),
**characterized in that** the outgoings towards said footrest (**3**) of said second passing through holes (**10**) are placed in correspondence of areas of said footrest (**3**) without said first passing through holes (**4**).

2. Running board according to claim 1, **characterized in that** said footrest (**3**) is realized by a recess (**20**) in the outline of said shaped body (**2**).

3. Running board according to claims 1 or 2, **characterized in that** said covering element (**9**) has a substantially laminar body (**11**) having a contact surface (**12**) with said footrest (**3**) and a working surface (**13**) having a plurality of projections and/or recesses (**14**).

4. Running board according to any of the preceding claims, **characterized in that** said shaped body (**2**) is joined to the vehicle (**V**) by fastening means (**5**).

5. Running board according to claim 4, **characterized in that** said fastening means (**5**) comprise one or more brackets (**6**) wherein a first portion (**7**) is joined to the vehicle (**V**) and a second portion (**8**) is joined to said shaped body (**2**).

6. Running board according to claim 5, **characterized in that** said second portion (**8**) is C-shaped.

7. Running board according to claim 5 or 6, **characterized in that** said brackets (**6**) have at least a partly web structure.

## Patentansprüche

1. Trittbrett für Fahrzeuge (V), umfassend:
- einen Formkörper (2), bei dem mindestens eine Fußstütze (3) vorliegt, die mit einer Vielzahl von ersten durchgehenden Durchgangslöchern (4) versehen ist, um das Ablaufen von Flüssigkeiten und/oder Feststoffen von der Fußstütze (3) zu ermöglichen;
- mindestens ein Abdeckelement (9) der Fußstütze (3), das mit einer Vielzahl von zweiten durchgehenden Durchgangslöchern (10) versehen ist, um das Ablaufen von Flüssigkeiten und/oder Feststoffen von dem Abdeckelement (9) auf die Fußstütze (3) zu ermöglichen;
**dadurch gekennzeichnet, dass** die Ausgänge in Richtung auf die Fußstütze (3) der zweiten durchgehenden Durchgangslöcher (10) in Übereinstimmung mit Bereichen der Fußstütze (3) ohne die ersten durchgehenden Durchgangslöcher (4) angeordnet sind.

2. Trittbrett nach Anspruch 1, **dadurch gekennzeichnet, dass** die Fußstützte (3) durch eine Vertiefung (20) im Umriss des Formkörpers (2) ausgebildet ist.

3. Trittbrett nach Anspruch 1 oder 2, **dadurch gekennzeichnet, dass** das Abdeckelement (9) einen im Wesentlichen lamellenförmigen Körper (11) aufweist, der eine Kontaktfläche (12) mit der Fußstütze (3) und eine Arbeitsfläche (13), die eine Vielzahl von Vorsprüngen und/oder Vertiefungen (14) aufweist, aufweist.

4. Trittbrett nach einem der vorhergehenden Ansprüche, **dadurch gekennzeichnet, dass** der Formkörper (2) durch Befestigungsmittel (5) mit dem Fahrzeug (V) zusammengefügt ist.

5. Trittbrett nach Anspruch 4, **dadurch gekennzeichnet, dass** die Befestigungsmittel (5) eine oder mehrere Stützen (6) umfassen, wobei ein erster Abschnitt (7) mit dem Fahrzeug (V) zusammengefügt ist und ein zweiter Abschnitt (8) mit dem Formkörper (2) zusammengefügt ist.

6. Trittbrett nach Anspruch 5, **dadurch gekennzeichnet, dass** der zweite Abschnitt (8) C-förmig ist.

7. Trittbrett nach Anspruch 5 oder 6, **dadurch gekennzeichnet, dass** die Stützen (6) mindestens teilweise eine Rippenstruktur aufweisen.

## Revendications

1. Marchepied pour véhicules (V), comprenant :
- un corps façonné (2) dans lequel il y a au moins un repose-pied (3) pourvu d'une pluralité de premiers trous débouchants (4) afin de permettre l'évacuation de fluides et/ou de solides à partir dudit repose-pied (3) ;
- au moins un élément de couverture (9) dudit repose-pied (3) pourvu d'une pluralité de seconds trous débouchants (10) afin de permettre l'évacuation de fluides et/ou de solides dudit élément de couverture (9) audit repose-pied (3),
**caractérisé en ce que** les sorties vers ledit repose-pied (3) desdits seconds trous débouchants (10) sont positionnées en correspondance de zones dudit repose-pied (3) sans lesdits premiers trous débouchants (4)

2. Marchepied selon la revendication 1, **caractérisé en ce que** ledit repose-pied (3) est réalisé par un évidement (20) dans le contour dudit corps façonné (2) .

3. Marchepied selon les revendications 1 ou 2, **caractérisé en ce que** ledit élément de couverture (9) comporte un corps sensiblement laminaire (11) comportant une surface de contact (12) avec ledit repose-pied (3) et une surface d'appui (13) comportant une pluralité de saillies et/ou d'évidements (14).

4. Marchepied selon une quelconque des revendications précédentes, **caractérisé en ce que** ledit corps façonné (2) est joint au véhicule (V) par des moyens de fixation (5).

5. Marchepied selon la revendication 4, **caractérisé en ce que** lesdits moyens de fixation (5) comprennent un ou plusieurs supports (6) dans lequel une première partie (7) est jointe au véhicule (V) et une seconde partie (8) est jointe audit corps façonné (2).

6. Marchepied selon la revendication 5, **caractérisé en ce que** ladite seconde partie (8) présente une forme de C.

7. Marchepied selon la revendication 5 ou 6, **caractérisé en ce que** lesdits supports (6) comportent au moins une structure partiellement en bande.
